# EUROPEAN PATENT SPECIFICATION

(11) **EP 0 411 854 B1**
(45) Date of publication and mention of the grant of the patent: **07.09.1994**
(21) Application number: 90308327.7
(22) Date of filing: 30.07.1990
(51) Int. Cl.: C07F 15/00, B01J 31/24, B01J 31/18

(54) **Process for the preparation of a rhodium complex**
Verfahren zur Herstellung eines Rhodiumkomplexes
Procédé pour la préparation de complexe du rhodium

(30) Priority: 31.07.1989 PT 91333
(43) Date of publication of application: 06.02.1991
(73) Proprietor: PLURICHEMIE ANSTALT, 9490 Vaduz (LI)
(72) Inventor: Heggie, William, Dr., PT-2830-Barreiro (PT); Page, Philip Ronald, Dr., PT-2710 Sintra (PT); Villax, Ivan, PT-1200 Lisboa (PT); Ghatak, Indira, Dr., Southgate, London N 14 6PB (GB); Hursthouse, Michael Barry, Prof., Hornchurch, Essex RM12 6SU (GB)
(74) Representative: Wain, Christopher Paul

(56) References cited:
- EP-A- 0 187 436
- EP-A- 0 283 615
- EP-A- 0 283 616

## Description

This invention relates to a process for the preparation of a rhodium complex, namely µ-3-carbopentazane-N¹,N⁴:N²,N⁵-bis[bis(triphenylphosphine)rhodium (I)]dinitrate.

This compound is described in our EP-A-0 283 616, wherein it is shown to be a stereospecific homogeneous hydrogenation catalyst, which is especially useful in the hydrogenation of the exocyclic methylene group of acid addition salts of 6-demethyl-6-deoxy-6-methylene-5-hydroxytetracycline (methacycline) to prepare α-6-deoxy-5-hydroxytetracycline (doxycycline). EP-A-0 283 616 describes the preparation of the µ-3-carbopentazane-N¹,N⁴:N²,N⁵-bis[bis(triphenylphosphine)rhodium (I)]dinitrate by reaction of rhodium trinitrate dihydrate, hydrazine or hydrazine monohydrate and triphenylphosphine in methanol. The crystalline product is obtained after a period of some 3 to 5 days.

We have now found an improved way of making the compound whereby inter alia the crystalline product can be obtained much more quickly and there is substantially no contamination of the compound by di(µ-hydrazine-N¹:N²)-bis[bis(triphenylphosphine)rhodium (I)]dinitrate, which is known from EP-A-0 283 616 to be formed under similar reaction conditions.

According to the present invention there is provided a process for the preparation of µ-3-carbopentazane-N¹,N⁴:N²,N⁵-bis[bis(triphenylphosphine)rhodium (I)]dinitrate, characterised by the fact that tris(triphenylphosphine)nitratorhodium (I) is reacted with hydrazine in degassed methanol under an inert atmosphere.

The starting material, tris(triphenylphosphine)nitratorhodium (I), has been described in British Patents Nos. 1,368,432 and 1,368,433. The preparation involved protonation of rhodium (II) acetate in methanol with 40% fluoroboric acid at 60°C for about 16 hours. The resulting green solution was then treated with a saturated methanolic solution of triphenylphosphine to give an orange solid, identified as tris(triphenylphosphine)rhodium (I) fluoroborate. This was then reacted with lithium nitrate to give tris(triphenylphosphine)nitratorhodium (I), as a red solid with a melting point of 120°C.

Thus, the starting tris(triphenylphosphine)nitratorhodium (I) can be prepared by this process. Alternatively, it can be prepared by reacting at reflux 1 mole of rhodium trinitrate dihydrate with 6 moles of triphenylphosphine in ethanol or methanol.

In the case where the solvent was ethanol, the reaction time was 24 hours. A yellow precipitate was filtered off and the red filtrate was allowed to stand at room temperature. Red crystals were formed which were filtered and dried. The identity of the yellow precipitate was confirmed as 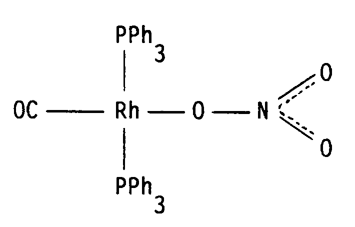
by X-ray crystallography.

The red crystals were shown to be 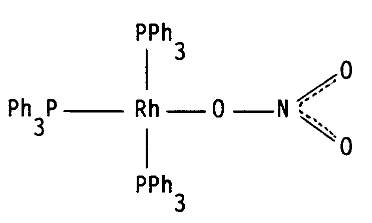
by X-ray crystallography and infrared spectroscopy. The melting point was 120°C, identical with that quoted in British Patents Nos. 1,368,432 and 1,368,433.

In the case of methanol, the reaction time was much shorter, typically of the order of one hour. A first yellow precipitate was filtered off, and the red filtrate was allowed to stand at room temperature. The red crystals so formed, were filtered and dried. The yellow microcrystalline precipitate has not been structurally identified. The red crystals have been confirmed to be tris(triphenylphosphine)nitratorhodium (I) by X-ray crystallography.

In the method of the invention, the tris(triphenylphosphine)nitratorhodium (I) is reacted with hydrazine in degassed methanol under an inert atmosphere. The relative proportions of reactants can vary, but we have found that the amount of hydrazine should preferably be from 3 to 6 moles, and most preferably from 4 to 5 moles, per mole of tris(triphenylphosphine)nitratorhodium (I). The nature of the inert atmosphere is not critical; we prefer to use nitrogen but other gases can be used. Generally, the reaction mixture is refluxed and then, upon standing for a short time, the orange crystalline product separates out and can be filtered off and dried, preferably under vacuum or in an inert atmosphere. The time of reflux will usually be a few hours; we have found refluxing overnight (16 hours) to be very satisfactory, although shorter periods can of course be used.

The identity of the product was confirmed as µ-3-carbopentazane-N¹,N⁴:N²,N⁵-bis[bis(triphenylphosphine)rhodium (I)] dinitrate 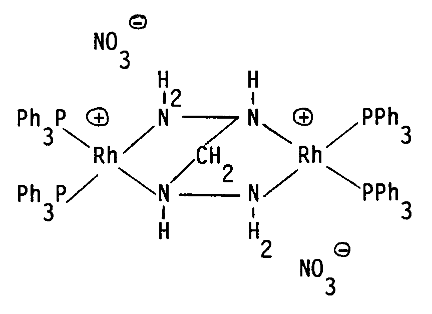
by X-ray crystallography. Additionally, the infrared and nuclear magnetic resonance spectra were identical to those of the product obtained in EP-A-0 283 616. Further, ³¹P-{¹H} nmr spectroscopy showed that the product was substantially uncontaminated by di(µ-hydrazine-N¹:N²)-bis[bis(triphenylphosphine)rhodium (I)] dinitrate. According to EP-A-0 283 616, this latter compound is formed under very similar conditions to those used to prepare the µ-3-carbopentazane-N¹,N⁴:N²,N⁵-bis[bis(triphenylphosphine)rhodium (I)] dinitrate.

The following examples serve to illustrate the invention, without in any way limiting the scope thereof.

### EXAMPLE 1 - Preparation of tris(triphenylphosphine)nitratorhodium (I) in ethanol

Rhodium trinitrate dihydrate (2.15 g; 7.02 mmoles as rhodium) was dissolved in 95% ethanol (60 ml), under a nitrogen atmosphere, in a two-necked round bottom flask. A hot solution of triphenylphosphine (10.51 g; 40.07 mmoles) in 95% ethanol (500 ml) was added. After refluxing under nitrogen for 24 hours, yellow triclinic crystals deposited in a deep red solution. These were filtered off and dried.

The found elemental analysis was C 61.98%; H 4.28%; N 1.80%; and P 9.42%. The infrared spectrum showed a strong sharp peak at 1965 cm⁻¹, indicative of the presence of a carbonyl group.

The compound was thus formulated as bis(triphenylphosphine)carbonylnitratorhodium (I), for which the calculated elemental analysis is C 61.94%; H 4.21%; N 1.95%; and P 8.63%. This formulation and a trans-phosphine structure was confirmed by X-ray crystallography.

The data for the crystal structure determination were collected using an Enraf-Nonius CAD4 diffractometer and graphite monochromated Mo-Kα radiation, following standard procedures, solved and developed via standard heavy atom methods and refined by least squares. The details are as follows:
(Ph₃P)₂(CO)(NO₃)Rh : C₃₇H₃₀O₄ NP₂Rh, Mol. wt. = 717.52, triclinic, space group P̅1̅, a = 9.395(1), b = 10.386(2), c = 18.081(3)Å, α = 102.58(1), β = 101.14(1), γ = 89.95(1)^{o}, V = 1687.9Å³, Z = 2, Dc = 1.41 g.cm⁻³, µ(Mo - Kα) = 6.28 cm⁻¹. The R value is currently 0.12 with disorder of the CO and NO₃ groups analogous to that found for the monoclinic form of the related carbonyl chloride complex complicating the refinement.

On standing, the red solution deposited red crystals which were identified by infrared spectroscopy with sharp peaks at 1270 and 1000 cm⁻¹, indicative of a monodentate nitrate ligand, and X-ray crystallography to be tris(triphenylphosphine)nitratorhodium (I). The details of the latter, carried out as described above, are as follows:
(Ph₃P)₃(NO₃)Rh : C₅₄H₄₅O₃NP₃Rh, Mol. wt. = 951.80, triclinic, space group P̅1̅, a = 10.506(1), b = 12.187(2), c = 18.420(2)Å, α = 87.56(2), β = 77.75(2), γ = 75.81(2)^{o}, V = 2234.3Å³, Z = 2, Dc = 1.414 g.cm⁻³, µ(Mo - Kα) = 5.20 cm⁻¹. The R value is 0.0246 for 6702 data and 739 parameters.

### EXAMPLE 2 - Preparation of tris(triphenylphosphine)nitratorhodium (I) in methanol

Rhodium trinitrate dihydrate (0.215 g; 0.70 mmoles as rhodium) was dissolved, under a nitrogen atmosphere, in a two-necked round bottom flask, in the minimum quantity of methanol to give a clear solution. A hot solution of triphenylphosphine (1.051 g; 4.01 mmoles) in methanol (30 ml) was added. After refluxing under nitrogen for 1 hour, a yellow precipitate was deposited in a deep red solution. The precipitate was filtered off and, on standing, the red filtrate deposited red crystals, which were shown to be tris(triphenylphosphine)nitratorhodium (I), identical with those obtained by the method given in Example 1.

### EXAMPLE 3 - Preparation of µ-3-carbopentazane N¹,N⁴:N²,N⁵-bis[bis(triphenyl phosphine)rhodium (I)] dinitrate

Tris(triphenylphosphine)nitratorhodium (I) (0.20 g; 0.21 mmoles) and hydrazine (3.0 ml of a methanolic solution containing 1.00 ml/100 ml; 0.95 mmoles) were mixed in dry, degassed methanol (30 ml). The mixture was refluxed overnight (16 hours), and then cooled to room temperature. The orange crystals that formed were filtered and dried.

The identity of the crystals was checked by single crystal diffractometry. The unit cell dimensions found were:
a = 12.878(2), b = 23.925(3), c = 24.441(4)Å, β = 92.61(2)^{o}, V = 7522.7Å³.

In comparison, the full structure determination as described in EP-A-0 283 616 gave:
a = 22.269(3), b = 23.311(3), c = 13.838(2)Å, β = 100.51(2)^{o}, V = 7063.0Å³.

The infrared and nuclear magnetic resonance spectra showed no discernible differences, thus suggesting that these crystals also were µ-3-carbopentazane-N¹,N⁴:N²,N⁵-bis[bis(triphenylphosphine)rhodium (I)] dinitrate. This was confirmed by a full crystal structure analysis, following standard procedures, which showed that the difference lay in the number of molecules of methanol of crystallisation - three per complex unit in these new crystals, one per complex in the former.

## Claims

1. A process for the preparation of µ-3-carbopentazane-N¹,N⁴:N²,N⁵-bis[bis(triphenylphosphine)rhodium (I)] dinitrate, characterised by the fact that (triphenylphosphine)nitratorhodium (I) is reacted with hydrazine in degassed methanol under an inert atmosphere.

2. A process according to claim 1, characterised by the fact that the reaction is carried out under reflux for about 16 hours.

3. A process according to claim 1, characterised by the fact that the inert atmosphere is nitrogen.

## Patentansprüche

1. Verfahren zur Herstellung von µ-3-Carbopentazan-N¹,N⁴:N²,N⁵-bis[bis(triphenylphosphin)rhodium(I)]dinitrat, dadurch gekennzeichnet, daß Tris(triphenylphosphin)nitratorhodium(I) mit Hydrazin in entgastem Methanol unter einer inerten Atmosphäre umgesetzt wird.

2. Verfahren nach Anspruch 1, dadurch gekennzeichnet, daß die Reaktion etwa 16 h unter Rückfluß durchgeführt wird.

3. Verfahren nach Anspruch 1, dadurch gekennziechnet, daß die inerte Atmosphäre Stickstoff ist.

## Revendications

1. Procédé de préparation de dinitrate de µ-3-carbopentazane.N¹,N⁴:N²,N⁵-bis[bis(triphénylphosphine)rhodium (I)], caractérisé en ce que l'on fait réagir du tris(triphénylphosphine)nitratorhodium (I) avec de l'hydrazine dans du méthanol dégazé sous une atmosphère inerte.

2. Procédé suivant la revendication 1, caractérisé en ce que la réaction est réalisée sous reflux pendant 16 heures environ.

3. Procédé suivant la revendication 1, caractérisé en ce que l'atmosphère inerte est de l'azote.
